# EUROPÄISCHE PATENTSCHRIFT

(11) **EP 1 527 910 B1**
(45) Veröffentlichungstag und Bekanntmachung des Hinweises auf die Patenterteilung: **21.03.2007**
(21) Anmeldenummer: 04020998.3
(22) Anmeldetag: 03.09.2004
(51) Int. Cl.: B60D 1/02

(54) **Anhängekupplung**
Trailer coupling
Attelage de remorque

(30) Priorität: 29.10.2003 DE 10350366; 26.11.2003 DE 10355228
(43) Veröffentlichungstag der Anmeldung: 04.05.2005
(73) Patentinhaber: Schnabl, Peter, 80935 München (DE)
(72) Erfinder: Schnabl, Josef, 94339 Leiblfing-Niedersunzing (DE); Schnabl, Paul, 80995 München (DE)
(74) Vertreter: Schaumburg, Thoenes, Thurn, Landskron

(56) Entgegenhaltungen:
- EP-A1- 0 000 325
- WO-A1-90/09292
- DE-A1- 2 206 617
- US-A- 2 743 943
- US-A- 3 578 828
- US-A- 5 456 185

## Beschreibung

Die Erfindung betrifft eine Anhängekupplung für ein Fahrzeug, insbesondere Nutzkraftfahrzeug mit einem Kupplungskopf und einem von diesem abstehenden Lagerzapfen, der in einem Lagergehäuse mittels einer Lageranordnung um seine Längsachse schwenkbar gelagert ist und Kippmomente überträgt, wobei die Lageranordnung mindestens ein Lager umfasst, das einen gehäusefesten Außenring und einen auf dem Lagerzapfen sitzenden Innenring hat.

Eine solche Anhängekupplung ist beispielsweise aus der DE 199 27 754 A1 bekannt. Auf eine solche Anhängekupplung an einem Nutzfahrzeug, beispielsweise einem Ackerschlepper werden sehr hohe Stützlasten ausgeübt, die versuchen, den Kupplungskopf um eine quer zur Längsachse des Lagerzapfens gerichtete Achse zu verschwenken. Dadurch werden die Lager für den Lagerzapfen stark belastet und unterliegen einem raschen Verschleiß. Dies gilt auch für eine Anhängekupplung der eingangs genannten Art, bei welcher die Lager Wälzlager sind, da die einzelnen Wälzkörper immer nur Linienberührung mit den Lagerflächen an Innen- und Außenring haben. Dieses Problem ist umso gravierender, je kürzer der Lagerzapfen ist. Gerade bei Ackerschleppern wird jedoch eine möglichst geringe Baulänge, gemessen in Längsrichtung des Lagerzapfens, angestrebt.

Der Erfindung liegt die Aufgabe zugrunde, eine Anhängekupplung der eingangs genannten Art anzugeben, die bei geringer Baulänge hohe Stützlasten aufnehmen kann und dabei einfach im Aufbau ist und einen geringen Wartungsaufwand erfordert.

Diese Aufgabe wird erfindungsgemäß dadurch gelöst, dass das mindestens eine Lager als Schräg-Gelenklager ausgebildet ist, bei dem die aneinander anliegenden Gleitflächen von Außenring und Innenring sphärische Ringflächen sind.

Die sphärische Ausbildung der Gleitflächen von Innen- und Außenring gewährleisten, dass der Innenring und der Außenring des Lagers bei einem auf den Lagerzapfen einwirkenden Kippmoment um eine quer zu dessen Längsrichtung gerichtete Achse stets vollflächig aneinander anliegen. Dadurch wird die Flächenpressung der Gleitflächen auch bei hohen Stützlasten gegenüber der aus der DE 199 27 754 A1 bekannten Lösung verringert.

Bei einer alternativen Lösung sind die aneinander anliegenden Gleitflächen von Außenring und Innenring konische Ringflächen. Diese Lösung ist nicht so vorteilhaft wie die erstgenannte Lösung, da die Gleitflächen bei einer Schwenkbewegung des Lagerzapfens um eine quer zu seiner Längsachse gerichteten Achse - streng betrachtet - nicht mehr vollflächig aneinander anliegen. Bei den hier betrachteten minimalen Schwenkbewegungen ist aber auch bei den konischen Ringflächen die Kontaktzone wesentlich größer als bei den bisher bekannten Zapfenlagern.

Zweckmäßigerweise ist das mindestens eine Lager an dem dem Kupplungskopf nahen Ende des Lagerzapfens angeordnet, um so das über den Kupplungskopf eingeleitete und auf das Lager wirkende Stützlastmoment möglichst klein zu halten.

Bei einer besonders bevorzugten Lösung umfasst die Lageranordnung zwei axial einander entgegengesetzt angeordnete Lager.

Vorzugsweise ist mindestens eine der einander zugewandten Gleitflächen jedes Lagers mit einer Kunststoffschicht versehen, die beispielsweise aus Polytetrafluorethylen bestehen kann, um die Gleitfähigkeit zu erhöhen und den Verschleiß der Gleitflächen zu verringern. Das Lager wird dadurch praktisch wartungsfrei.

Vorzugsweise ist die Lageranordnung so aufgebaut, dass von der Wand einer das mindestens eine Lager aufnehmenden Lagerbohrung des Lagergehäuses in einem axial mittleren Bereich derselben ein Ringsteg radial nach innen vorsteht, der einen Anschlag für den jeweiligen in die Lagerbohrung eingesetzten Außenring bildet. Um das oder die Lager gegen Verschmutzung zu schützen, ist die Lagerbohrung an ihrem dem Kupplungskopf nahen Ende durch einen einstückig mit dem Lagerzapfen ausgebildeten Flansch und an ihrem anderen Ende durch einen Deckel verschlossen, der an der achsnormalen Stirnfläche des Lagerzapfens befestigt ist und das Herausziehen des Lagerzapfens aus der Lagerbohrung verhindert. Zweckmäßigerweise ist dabei zwischen dem Lagergehäuse einerseits und dem Deckel bzw. dem Flansch andererseits jeweils ein Dichtring angeordnet, um die Lageranordnung völlig abzuschließen.

Zwischen dem Deckel und dem ihm zugewandten Innenring kann mindestens eine Ausgleichsscheibe einsetzbar sein, um das Lagerspiel einzustellen.

Einerseits soll zwar der Kupplungskopf im Betrieb um die Längsachse des Lagerzapfens drehbar sein, andererseits aber im freien Zustand möglichst eine horizontale Lage einnehmen, um den Einkuppelvorgang zu erleichtern. Um zu verhindern, dass der Kupplungskopf sich allzu leicht in eine beliebige Stellung drehen kann, umfasst die erfindungsgemäße Anhängekupplung eine Bremseinrichtung zum Erzeugen eines Drehwiderstandes gegenüber einer Drehung des Lagerzapfens in der Lageranordnung. Bei einer bevorzugten Ausführungsform hat diese Bremseinrichtung einen Bremsring, der drehfest auf dem Lagerzapfen zwischen den Innenringen der beiden Lager angeordnet ist, sowie ein an der Umfangsfläche des Bremsringes schleifendes Bremselement, das radial verstellbar in dem Lagergehäuse angeordnet ist. Der Bremsring liegt zweckmäßigerweise innerhalb des Ringsteges und hat - in einem die Zapfenachse enthaltenden Schnitt betrachtet - eine sphärische Außenumfangsfläche, so dass er eine geringfügige Schwenkbewegung des Lagerzapfens um eine quer zu dessen Längsrichtung gerichtete Achse nicht behindert. Das Bremselement umfasst beispielsweise einen in einer Bohrung des Lagergehäuses radial verschiebbaren Bremskörper sowie eine auf diesen einwirkende Stellschraube, mit dem die Bremskraft eingestellt werden kann. Das Bremselement hat eine zur Anlage an dem Bremsring bestimmte Bremsfläche, die vorzugsweise ebenfalls sphärisch ist, sodass das Bremselement nicht gegen eine Drehung um seine radiale Stellrichtung gesichert zu werden braucht und dennoch mit seiner Bremsfläche vollflächig an dem Bremsring anliegt.

Um die bevorzugte horizontale Einkuppelstellung des Kupplungskopfes festzulegen, ist zweckmäßigerweise eine Rasteinrichtung vorgesehen. Diese kann eine in der Umfangsfläche des Bremsringes ausgebildete Rastvertiefung und ein zum Eingriff in diese bestimmtes Rastelement umfassen, das in dem Lagergehäuse radial verstellbar gelagert und nach radial innen vorgespannt ist, so dass es bei einer Drehung des Lagerzapfens aus der Rastvertiefung ausgehoben und gegen die Federvorspannung nach radial außen gedrückt wird.

Bei einer bevorzugten Ausführungsform ist das Rastelement ein Raststift, der in dem Bremskörper verschiebbar gelagert und durch eine Feder vorgespannt ist, die sich an der Stellschraube für den Bremskörper abstützt. Auf diese Weise sind die Bremseinrichtung und die Rasteinrichtung in einer Baugruppe vereinigt, was nicht nur den Bauaufwand verringert, sondern auch die Schwächung des Lagergehäuses durch unnötig viele Bohrungen vermeidet.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert. Es zeigen:
- Fig. 1: eine teilweise schematische Seitenansicht der erfindungsgemäßen Anhängekupplung,
- Fig. 2: eine Endansicht der Anhängekupplung in Richtung des Pfeiles A in Figur 1,
- Fig. 3: einen die Achse des Lagerzapfens enthaltenden Teilschnitt durch die Anhängekupplung gemäß Figur 1,
- Fig. 4 und 5: jeweils einen Schnitt entlang der Linie IV-IV in Figur 1 bei verschiedenen Drehstellungen des Kupplungskopfes um die Längsachse des Lagerzapfens und
- Fig. 6: eine vergrößerte Darstellung der Einzelheit X in Figur 4.

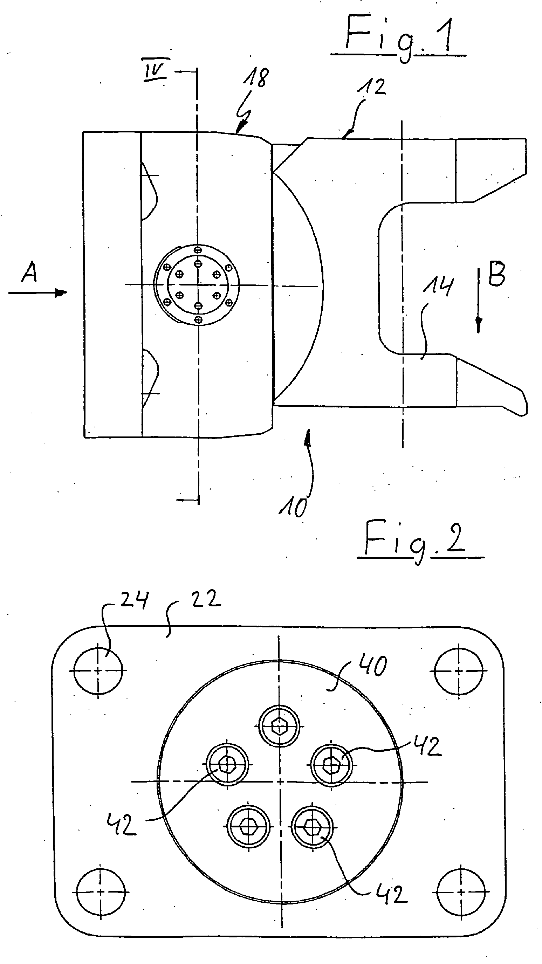

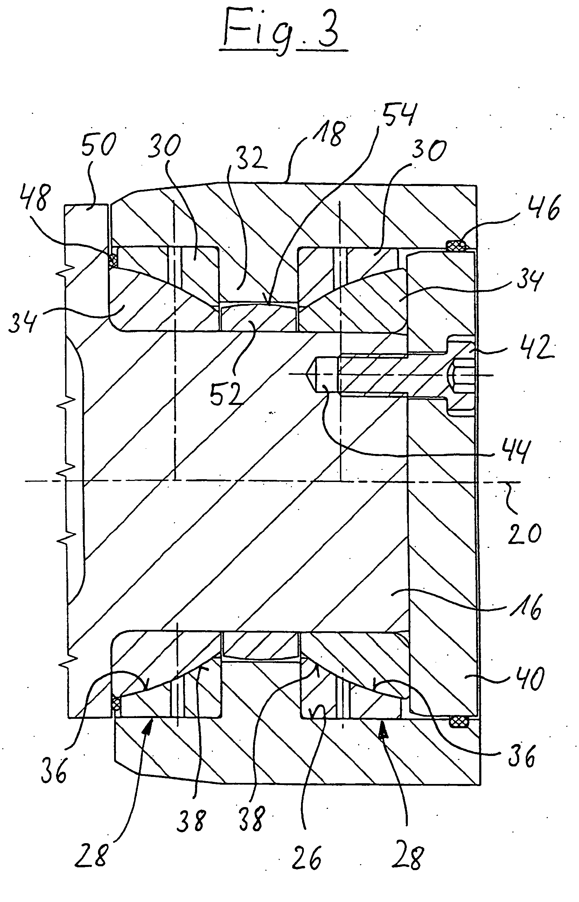

Die in der Figur 1 schematisch dargestellte Anhängekupplung 10 umfasst einen Kupplungskopf 12, von dem in der Figur 1 lediglich das Fangmaul 14 dargestellt ist. Der Kupplungsbolzen und die Betätigungsmechanik für eine Verstellung desselben sind nicht dargestellt. Der Kupplungskopf 14 ist einstückig mit einem zylindrischen Lagerzapfen 16 (Figur 3) verbunden, der in einem Lagergehäuse 18 um seine Längsachse 20 drehbar gelagert ist. Das Lagergehäuse 18 hat einen Flansch 22 (Figur 2), mit dem es an einer Traverse eines Fahrzeugchassis angeschraubt werden kann, wobei die Schraubbolzen entsprechende Bohrungen 24 in dem Flansch 22 durchsetzen.

Das Lagergehäuse 18 hat eine Lagerbohrung 26 zur Aufnahme zweier Schräggelenklager 28, mit denen der Lagerzapfen 16 in dem Lagergehäuse 18 um die Achse 20 drehbar gelagert ist. Jedes Schräggelenklager 28 umfasst einen Außenring 30, der in die Lagerbohrung 26 eingepresst ist und an einem Ringsteg 32 anliegt, der von der Wand der Lagerbohrung 26 radial nach innen in die Lagerbohrung vorspringt. Dem Außenring 30 ist jeweils ein Innenring 34 zugeordnet, der drehfest auf dem Lagerzapfen 16 sitzt. Die Innenumfangsfläche 36 des Außenringes 30 und die Außenumfangsfläche 38 des Innenringes 34 sind sphärische Ringflächen und bilden die Gleitflächen, mit denen der Außenring 30 und der Innenring 34 aneinander anliegen. Mindestens eine dieser Flächen 36, 38 jedes Schräggelenklagers 28 kann mit einer Schicht aus Polytetrafluorethylen beschichtet sein, um die Gleitfähigkeit zwischen den Lagerringen 30, 34 zu erhöhen.

Der Lagerzapfen 16 wird in dem Lagergehäuse 18 durch einen Deckel 40 gehalten, der mit Schrauben 42, welche in achsparallele Gewindebohrungen 44 des Lagerschaftes 16 eingeschraubt sind, an diesem befestigt ist. Der Spalt zwischen dem Deckel 40 und der Wand der Lagerbohrung 26 ist durch einen Dichtring 46 abgedichtet, der in eine entsprechende Nut in der Wand der Lagerbohrung 26 eingelegt ist. Nahe ihrem anderen Ende ist die Lagerbohrung 26 durch einen Dichtring 48 abgedichtet, der zwischen einen mit dem Lagerzapfen 16 einstückigen und diesen radial überragenden Flansch 50 und den entsprechenden Außenring 30 eingelegt ist.

Wird auf den Kupplungskopf, d.h. beispielsweise den unteren Teil des Kupplungsmaules 14 eine in Figur 1 durch den Pfeil B angedeutete Stützlast ausgeübt, welche den Lagerzapfen 16 in dem Lagergehäuse 18 um eine zur Lagerachse 20 senkrechte Achse verschwenken will, so verschiebt dieses durch die Stützlast bewirkte Kippmoment die Innenringe 34 der beiden Schräggelenklager 28 relativ zu dem jeweiligen Außenring 30 geringfügig, wobei jedoch die jeweiligen Gleitflächen 36 und 38 der Ringe 30, 34 stets vollflächig aneinander anliegen. Dadurch kann die Stützlast großflächig von den Lagern aufgenommen werden, so dass die lokale Belastung für die Lagerflächen relativ gering ist und diese damit auch einem geringeren Verschleiß unterliegen. Das Lager ist trotz seiner axial kurzen Bauweise damit hochbelastbar. Es ist darüber hinaus einfach in seinem Aufbau und nahezu wartungsfrei.

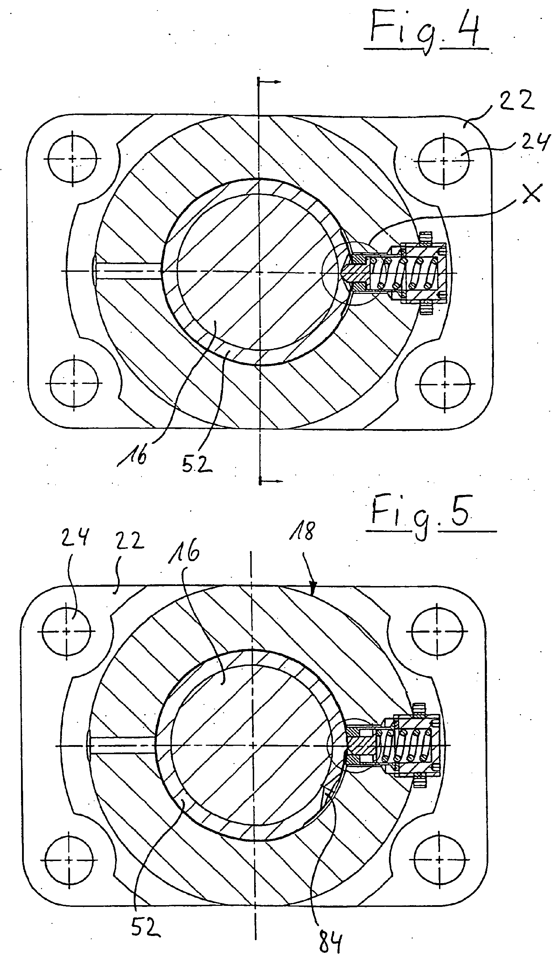

Der Kupplungskopf 12 kann sich zwar um die Achse 20 gegenüber dem Lagergehäuse 18 drehen, jedoch sollte er im nicht gekuppelten Zustand möglichst immer die in der Figur 1 dargestellte bevorzugte horizontale Stellung einnehmen, in welcher die Zugöse eines anzuhängenden Fahrzeuges in das Kupplungsmaul 14 eingeführt werden kann. Diese Vorzugsstellung wird durch eine Bremseinrichtung und einen Rastmechanismus gewährleistet, die nun anhand der Figuren 4 bis 6 näher erläutert werden sollen.

Die Bremseinrichtung umfasst einen zwischen den Innenringen 34 auf dem Lagerzapfen 16 angeordneten und drehfest mit ihm verbundenen Bremsring 52, der radial innerhalb des Ringsteges 32 liegt und eine sphärische Außenumfangsfläche 54 hat, wie dies in Figur 3 zu erkennen ist. Diesem Bremsring ist ein allgemein mit 56 bezeichnetes Bremselement zugeordnet, das gegen die Außenumfangsfläche 54 des Bremsringes 52 gepresst wird. Es umfasst einen zylindrischen Bremskörper 58 mit einer ebenfalls sphärisch gekrümmten Bremsfläche 57, der in eine die Wand des Lagergehäuses 16 und den Ringsteg 32 radial durchsetzende Bohrung 60 eingesetzt ist, sowie eine Stellschraube 62, die in einen Gewindeabschnitt 64 der Bohrung 60 eingeschraubt ist. Zwischen der Stellschraube 62 und dem radial äußeren Ende des Bremskörpers 58 ist ein elastischer Ausgleichsring 66 angeordnet. Durch mehr oder weniger starkes Anziehen der Stellschraube 62 kann der Bremskörper 58 mit mehr oder weniger Kraft gegen die Außenumfangsfläche 54 des Bremsringes 52 gespannt und nach dem Einstellen der gewünschten Bremskraft mittels einer Kontermutter 68 in der gewünschten Stellung fixiert werden. Diese Reibungsbremse ermöglicht einerseits eine Drehung des Kupplungskopfes bei entsprechender Krafteinwirkung auf den Kupplungskopf, verhindert aber ein freies Rotieren des Kupplungskopfes im ungekuppelten Zustand.

Zum Festlegen des Kupplungskopfes in einer vorgegebenen Einkuppelstellung ist in dem Bremskörper 58 ein radial verstellbares Rastelement 70 angeordnet, das mit einem durchmesserkleineren radial inneren Abschnitt 72 eine Bohrung 74 in dem radial inneren Ende des Bremskörpers 58 durchsetzt und mit einem durchmessergrößeren Flanschabschnitt 76 an seinem radial äußeren Ende in einer radial größeren Bohrung 78 in dem Bremskörper 58 geführt ist. Das Rastelement 70 wird durch eine Schraubendruckfeder 80 nach radial innen vorgespannt, die sich einerseits an dem Flansch 76 des Rastelementes 70 und andererseits an dem Boden einer topfförmigen radialen Bohrung 82 in der Stellschraube 62 abstützt.

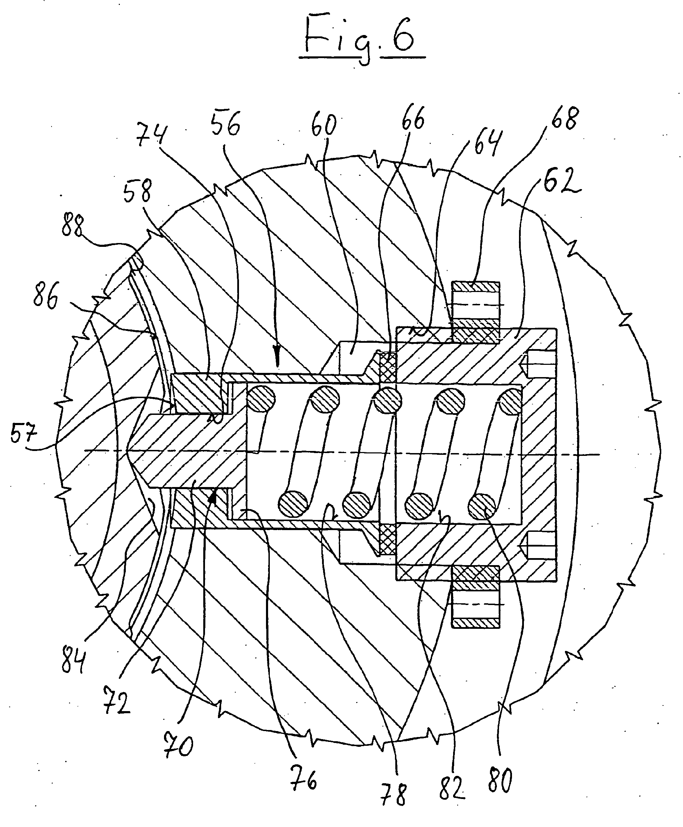

Das Rastelement 70 greift mit seinem radial inneren Abschnitt 72 in eine Rastvertiefung 84, die am Außenumfang des Bremsringes 52 vorgesehen ist. Die relative Position des Rastelementes 70 und der Rastvertiefung 84 an dem Lagergehäuse 18 bzw. dem Lagerzapfen 16 ist so gewählt, dass der Kupplungskopf 14 die in der Figur 1 dargestellte Einkuppelstellung einnimmt, wenn das Rastelement 70 in die Rastvertiefung 84 eingreift. Man erkennt in Figur 6, dass sowohl das radial innere Ende 72 des Rastelementes 70 als auch die Rastvertiefung 84 mit Konusflächen versehen sind, die bei einer Drehung des Lagerzapfens 16 und damit des Bremsringes 52 relativ zum Lagergehäuse 18 bewirken, dass das Rastelement 70 gegen die Spannung der Feder 80 radial nach außen gedrängt wird und aus der Rastvertiefung 84 austreten kann, ohne die Drehung des Lagerzapfens 16 zu sperren. Umgekehrt bewirken die Konusflächen eine Rückstellung des Lagerzapfens und damit des Kupplungskopfes in seine der Einkuppelstellung entsprechende Mittellage.

An die Rastvertiefung 84 schließt sich in Umfangsrichtung jeweils über einen gewissen Drehwinkel eine Nut 86 an, in welcher das Rastelement 70 nach dem Austreten aus der Rastvertiefung 84 zunächst gleitet, bis es gegen eine Rampe 88 stößt, und die einen Kontakt des Bremskörpers 58 mit der Umfangsfläche 54 des Bremsringes 52 verhindert, solange das Rastelement 70 noch in die Rastvertiefung 84 eingreift und ein Rückstellmoment auf den Lagerzapfen ausübt.

## Patentansprüche

1. Anhängekupplung für ein Fahrzeug, insbesondere Nutzkraftfahrzeug, mit einem Kupplungskopf (12) und einem von diesem abstehenden Lagerzapfen (16), der in einem Lagergehäuse(18) mittels einer Lageranordnung um seine Längsachse (20) schwenkbar gelagert ist und Kippmomente überträgt, wobei die Lageranordnung mindestens ein Lager (28) umfasst, das einen gehäusefesten Außenring (30) und einen auf dem Lagerzapfen (16) sitzenden Innenring (34) hat, **dadurch gekennzeichnet, dass** das mindestens eine Lager (28) als Schräg-Gelenklager ausgebildet ist, bei dem die aneinander anliegenden Gleitflächen (36, 38) von Außenring (30) und Innenring (34) sphärische Ringflächen sind.

2. Anhängekupplung für ein Fahrzeug, insbesondere Nutzkraftfahrzeug, mit einem Kupplungskopf (12) und einem von diesem abstehenden Lagerzapfen (16), der in einem Lagergehäuse(18) mittels einer Lageranordnung um seine Längsachse (20) schwenkbar gelagert ist und Kippmomente überträgt, wobei die Lageranordnung mindestens ein Lager (28) umfasst, das einen gehäusefesten Außenring (30) und einen auf dem Lagerzapfen (16) sitzenden Innenring (34) hat, **dadurch gekennzeichnet, dass** die aneinander anliegenden Gleitflächen (36, 38) von Außenring (30) und Innenring (34) konische Ringflächen sind.

3. Anhängekupplung nach Anspruch 1 oder 2, **dadurch gekennzeichnet, daß** das mindestens eine Lager (28) an dem dem Kupplungskopf (12) nahen Ende des Lagerzapfens (16) angeordnet ist.

4. Anhängekupplung nach einem der Ansprüche 1 bis 3, **dadurch gekennzeichnet, daß** die Lageranordnung zwei axial einander entgegengesetzt angeordnete Lager (28) umfasst.

5. Anhängekupplung nach einem der Ansprüche 1 bis 4, **dadurch gekennzeichnet, dass** von der Wand einer das mindestens eine Lager (28) aufnehmenden Lagerbohrung (26) des Lagergehäuses (18) in einem axial mittleren Bereich derselben ein Ringsteg (32) radial nach innen absteht, der einen Anschlag für den jeweiligen in die Lagerbohrung (26) eingesetzten Außenring (30) bildet.

6. Anhängekupplung nach einem der Ansprüche 1 bis 5, **dadurch gekennzeichnet, dass** mindestens eine der Gleitflächen (36, 38) des mindestens einen Lagers (28) mit einer Kunststoffschicht versehen ist.

7. Anhängekupplung nach Anspruch 6, **dadurch gekennzeichnet, dass** die Kunststoffschicht aus Polytetrafluorethylen besteht.

8. Anhängekupplung nach einem der Ansprüche 1 bis 7, **dadurch gekennzeichnet, dass** die Lagerbohrung (26) an ihrem dem Kupplungskopf (12) nahen Ende durch einen einstückig mit dem Lagerzapfen (16) ausgebildeten Flansch (50) und an ihrem anderen Ende durch einen Deckel (40) verschlossen ist, der an der achsnormalen Stirnfläche des Lagerzapfens (16) befestigt ist.

9. Anhängekupplung nach Anspruch 8, **dadurch gekennzeichnet, dass** zwischen dem Lagergehäuse (18) einerseits und dem Deckel (40) bzw. dem Flansch (50) andererseits jeweils eine Dichtung (46, 48) eingesetzt ist.

10. Anhängekupplung nach Anspruch 8 oder 9, **dadurch gekennzeichnet, dass** zwischen den Deckel (40) und den ihm zugewandten Innenring (34) mindestens eine Ausgleichsscheibe zum Einstellen des Lagerspieles einsetzbar ist.

11. Anhängekupplung nach einem der Ansprüche 1 bis 10 **gekennzeichnet durch** eine Bremseinrichtung zum Erzeugen eines Drehwiderstandes gegenüber einer Drehung des Lagerzapfens (16) in der Lageranordnung.

12. Anhängekupplung nach Anspruch 11, **dadurch gekennzeichnet, dass** die Bremseinrichtung einen Bremsring (52), der drehfest auf dem Lagerzapfen (16) angeordnet ist, und ein an der Umfangsfläche (54) des Bremsringes (52) schleifendes Bremselement (56) umfasst, das radial verstellbar in dem Lagergehäuse (18) angeordnet ist.

13. Anhängekupplung nach Anspruch 12, **dadurch gekennzeichnet, dass** das Bremselement (56) einen in einer Bohrung (60) des Lagergehäuses (18) radial verschiebbaren Bremskörper (58) und eine auf diesen einwirkende Stellschraube (62) umfasst.

14. Anhängekupplung nach einem der Ansprüche 11 bis 13, **dadurch gekennzeichnet, dass** der Bremsring (52) innerhalb des Ringsteges (32) liegt und eine sphärische Außenumfangsfläche (54) hat.

15. Anhängekupplung nach einem der Ansprüche 1 bis 14, **gekennzeichnet durch** eine Rasteinrichtung zum Festlegen einer vorgegebenen Stellung des Kupplungskopfes (12) relativ zum Lagergehäuse (18).

16. Anhängekupplung nach Anspruch 13, **dadurch gekennzeichnet, dass** die Rasteinrichtung eine in der Umfangsfläche (54) des Bremsringes (52) ausgebildete Rastvertiefung (84) und ein zum Eingriff in diese bestimmtes Rastelement (70) umfasst, das in dem Lagergehäuse (18) radial verstellbar gelagert und nach radial innen vorgespannt ist.

17. Anhängekupplung nach Anspruch 14, **dadurch gekennzeichnet, dass** das Rastelement (70) ein Raststift ist, der in dem Bremskörper (58) verschiebbar gelagert und durch eine Feder (80) vorgespannt ist, die sich an der Stellschraube (62) für den Bremskörper (58) abstützt.

## Claims

1. Trailer coupling for a vehicle, particularly a utility vehicle, having a coupling head (12) and a bearing pin (16) projecting away from this which is mounted so as to be pivotable about its longitudinal axis (20) in a bearing housing (18) by means of a bearing arrangement and transmits tilting moments, wherein the bearing arrangement comprises at least one bearing (28) which has a housing-secure outer ring (30) and an inner ring (34) arranged on the bearing pin (16), **characterised in that** the at least one bearing (28) is formed as an angular contact spherical plain bearing, wherein the sliding surfaces (36, 38) of the outer ring (30) and the inner ring (34) lying against each other are spherical annular surfaces.

2. Trailer coupling for a vehicle, particularly a utility vehicle, having a coupling head (12) and a bearing pin (16) projecting away from this which is mounted so as to be pivotable about is longitudinal axis (20) in a bearing housing (18) by means of a bearing arrangement and transmits tilting moments, wherein the bearing arrangement comprises at least one bearing (28) which has a housing-tight outer ring (30) and an inner ring (34) arranged on the bearing pin (16), **characterised in that** the sliding surfaces (36, 38) of the outer ring (30) and the inner ring (34) lying against each other are conical annular surfaces.

3. Trailer coupling according to claim 1 or 2, **characterised in that** the at least one bearing (28) is arranged on the end of the bearing pin (16) close to the coupling head (12).

4. Trailer coupling according to one of the claims 1 to 3, **characterised in that** the bearing arrangement comprises two bearings (28) arranged axially opposing each other.

5. Trailer coupling according to one of the claims 1 to 4, **characterised in that** an annular web (32) projects radially inwards from the wall of a bearing bore (26) of the bearing housing (18) receiving the at least one bearing (28) in an axially middle region thereof, said annular web (32) forming a stop for the respective outer ring (30) inserted into the bearing bore (26).

6. Trailer coupling according to one of the claims 1 to 5, **characterised in that** at least one of the sliding surfaces (36, 38) of the at least one bearing (28) is provided with a plastic layer.

7. Trailer coupling according to claim 6, **characterised in that** the plastic layer consists of polytetrafluorethylene.

8. Trailer coupling according to one of the claims 1 to 7, **characterised in that** the bearing bore (26) is closed at its end close to the coupling head (12) by a flange (50) formed integrally with the bearing pin (16) and at its other end by a cap (40) which is fixed to the axis-normal end face of the bearing pin (16).

9. Trailer coupling according to claim 8, **characterised in that** respective seals (46, 48) are inserted between the bearing housing (18) on the one hand and the cap (40) or the flange (50) on the other hand.

10. Trailer coupling according to claim 8 or 9, **characterised in that** at least one spacer disc is inserted between the cap (40) and the inner ring (34) facing it for adjusting the bearing clearance.

11. Trailer coupling according to one of the claims 1 to 10, **characterised by** a brake device for producing a rotational resistance with respect to a rotation of the bearing pin (16) in the bearing arrangement.

12. Trailer coupling according to claim 11, **characterised in that** the brake device comprises a brake ring (52) which is arranged so as to be rotationally secure on the bearing pin (16) and a brake element (56) gliding on the peripheral surface (54) of the brake ring (52), said brake element (56) being arranged so as to be radially adjustable in the bearing housing (18).

13. Trailer coupling according to claim 12, **characterised in that** the brake element (56) comprises a brake body (58) which is radially displaceable in a bore (60) of the bearing housing (18) and a set screw (62) acting on said brake body (58).

14. Trailer coupling according to one of the claims 11 to 13, **characterised in that** the brake ring (52) lies within the annular web (32) and has a spherical outer peripheral surface (54).

15. Trailer coupling according to one of the claims 1 to 14, **characterised by** an engagement device for fixing a predefined position of the coupling head (12) relative to the bearing housing (18).

16. Trailer coupling according to claim 13, **characterised in that** the engagement device comprises an engagement depression (84) formed in the peripheral surface (54) of the brake ring (52) and an engagement element (70) intended for engagement therein, said engagement element (70) being mounted in the bearing housing (18) so as to be radially adjustable and being pre-tensioned radially inwards.

17. Trailer coupling according to claim 14, **characterised in that** the engagement element (70) is an engagement pin which is mounted so as to be displaceable in the brake body (58) and is pre-tensioned by a spring (80) which rests against the set screw (62) for the brake body (58).

## Revendications

1. Attelage pour véhicule, notamment pour véhicule utilitaire, lequel attelage comporte une tête d'attelage (12) et un tourillon (16) qui s'étend à partir de ladite tête d'attelage et qui est monté dans un logement de palier (18) au moyen d'un agencement de palier de façon à pouvoir pivoter autour de son axe longitudinal (20) et qui transmet des couples de renversement, l'agencement de palier comportant au moins un palier (28) qui possède une bague extérieure (30) fixée au logement et une bague intérieure (34) siégeant sur le tourillon (16), **caractérisé en ce que** ledit au moins un palier (28) est conformé en palier radial à butée dans lequel les surfaces de glissement (36, 38), portant l'une contre l'autre, de la bague extérieure (30) et de la bague intérieure (34) sont des surfaces annulaires sphériques.

2. Attelage pour véhicule, notamment pour véhicule utilitaire, lequel attelage comporte une tête d'attelage (12) et un tourillon (16) qui s'étend à partir de ladite tête d'attelage et qui est monté dans un logement de palier (18) au moyen d'un agencement de palier de façon à pouvoir pivoter autour de son axe longitudinal (20) et qui transmet des couples de renversement, l'agencement de palier comportant au moins un palier (28) qui possède une bague extérieure (30) fixée au logement et une bague intérieure (34) siégeant sur le tourillon (16), **caractérisé en ce que** les surfaces de glissement (36, 38), portant l'une contre l'autre, de la bague extérieure (30) et de la bague intérieure (34) sont des surfaces annulaires coniques.

3. Attelage selon la revendication 1 ou 2, **caractérisé en ce que** ledit au moins un palier (28) est disposé à l'extrémité du tourillon (16) qui est proche de la tête d'attelage (12).

4. Attelage selon l'une des revendications 1 à 3, **caractérisé en ce que** l'agencement de palier comporte deux palier (28) opposés axialement l'un à l'autre.

5. Attelage selon l'une des revendications 1 à 4, **caractérisé en ce qu'**une nervure annulaire (32) s'étend radialement vers l'intérieur à partir de la paroi d'un perçage de palier (26), ménagé dans le logement de paliers (18) et recevant ledit au moins un palier (28), dans une région située axialement au milieu de ladite paroi, et forme une butée destinée à la bague extérieure respective (30) insérée dans le perçage de palier (26).

6. Attelage selon l'une des revendications 1 à 5, **caractérisé en ce que** ladite au moins une des surfaces de glissement (36, 38) dudit au moins un palier (28) est dotée d'un revêtement de matière plastique.

7. Attelage selon la revendication 6, **caractérisé en ce que** le revêtement de matière plastique est en polytétrafluoréthylène.

8. Attelage selon l'une des revendications 1 à 7, **caractérisé en ce que** le perçage de palier (26) est fermé à son extrémité proche de la tête d'attelage (12) par un flasque (50) conformé en étant venu de matière avec le tourillon (16), et à son autre extrémité par un couvercle (40) qui est fixé sur la surface frontale, normale à l'axe, du tourillon (16).

9. Attelage selon la revendication 8, **caractérisé en ce qu'**une garniture d'étanchéité (46, 48) est insérée entre le logement de palier (18) d'une part et le couvercle (40), respectivement le flasque (50), d'autre part.

10. Attelage selon la revendication 8 ou 9, **caractérisé en ce qu'**au moins un disque de compensation, destiné à régler le jeu des paliers, peut être inséré entre le couvercle (40) et la bague intérieure (34) située du côté dudit couvercle.

11. Attelage selon l'une des revendications 1 à 10, **caractérisé par** un dispositif de freinage destiné à générer une résistance à la rotation s'opposant à la rotation du tourillon (16) dans l'agencement de palier.

12. Attelage selon la revendication 11, **caractérisé en ce que** le dispositif de freinage comporte une bague de freinage (52) qui est disposée, sans pouvoir tourner, sur le tourillon (16), et un élément de freinage (56) qui glisse sur la surface périphérique (54) de la bague de freinage (52) et qui est disposé dans le logement de palier (18) de façon à être mobile radialement.

13. Attelage selon la revendication 12, **caractérisé en ce que** l'élément de freinage (56) comporte un corps de freinage (58) qui est mobile radialement dans un perçage (60) ménagé dans le logement de palier (18), et une vis de réglage (62) agissant sur ledit corps de freinage.

14. Attelage selon l'une des revendications 11 à 13, **caractérisé en ce que** la bague de freinage (52) est disposée à l'intérieur de la nervure annulaire (32), et possède une surface périphérique extérieure sphérique (54).

15. Attelage selon l'une des revendications 1 à 14, **caractérisé par** un dispositif d'encliquetage destiné à immobiliser la tête d'attelage (12) dans une position prescrite par rapport au logement de palier (18).

16. Attelage selon la revendication 15, **caractérisé en ce que** le dispositif d'encliquetage comporte une cavité d'encliquetage (84) ménagée dans la surface périphérique (54) de la bague de freinage (52), et un élément d'encliquetage (70) qui est destiné à s'engager dans ladite cavité d'encliquetage, qui est monté de façon à être mobile radialement dans le logement de palier (18) et qui est précontraint radialement vers l'intérieur.

17. Attelage selon la revendication 16, **caractérisé en ce que** l'élément d'encliquetage (70) est une broche d'arrêt qui est montée de façon à pouvoir se déplacer dans le corps de freinage (58), et qui est précontrainte par un ressort (80) qui s'appuie sur la vis de réglage (62) destinée au corps de freinage (58).
